Europäisches Patentamt

European Patent Office

Office européen des brevets

(19)

(11) Publication number: **0 002 467**
**B1**

(12) **EUROPEAN PATENT SPECIFICATION**

(45) Date of publication of patent specification: **31.03.82**

(21) Application number: **78101498.0**

(22) Date of filing: **01.12.78**

(51) Int. Cl.³: **H 04 Q 11/04, H 04 J 3/12**

(54) Equipment for telephone interexchange signalling on PCM carrier realized by centralized-logic line-exchange interface units.

(30) Priority: **01.12.77 IT 6970877**

(43) Date of publication of application:
**27.06.79 Bulletin 79/13**

(45) Publication of the grant of the patent:
**31.03.82 Bulletin 82/13**

(84) Designated Contracting States:
**CH DE FR GB NL SE**

(56) References cited:
**FERNMELDE-PRAXIS, vol. 48, 25th January 1971, number 2.
Berlin
T. IRMER: "Technik der PCM-Ueber-tragungssysteme", pages 51—68.**

**1976 INTERNATIONAL ZUERICH SEMINAR ON DIGITAL COMMUNICATIONS; 9th—11th March 1976
Zürich
J. N. MEREUR: "The E10 System in the French Telephone Network", pages E1.1—E1.8**

(73) Proprietor: **CSELT Centro Studi e Laboratori Telecomunicazioni S.p.A.
Via Guglielmo Reiss Romoli, 274
I-10148 Turin (IT)**

(72) Inventor: **Di Pino, Duccio
Via dei Castagni, 18
Pino Torinese (TO) (IT)**

(74) Representative: **Riederer Freiherr von Paar zu Schönau, Anton et al,
Müllerstrasse 31
D-8000 München 5 (DE)**

(56) References cited:
**1976 (NATIONAL TELECOMMUNICATIONS CONFERENCE, November 29, 30 and 1 December 1976, Dallas, Texas
New York
D. J. McAULIFFE et al.: "Micro-processor Applications in Communications Switching", pages 15.2—1 to 15.2—5.**

**SYSTEMS TECHNOLOGY, September 1973
Number 17
Liverpool
J. A. AVERY et al.: "Design of a 30-channel PCM transmission system", pages 8—16.**

Courier Press, Leamington Spa, England.

## Equipment for telephone interexchange signalling on PCM carrier
## realized by centralized-logic line-exchange interface units

The invention relates to an interexchange equipment located at a near exchange for telephone signalling between the near exchange and a remote exchange on PCM carrier arranged by frames of time slots, said equipment utilizing

a) a centralized processing unit recognizing analogous signalling criteria consisting of electrical statuses, and sending criteria to the exchanges,

b) centralized-logic line units linked between the processing unit and the near exchange and connected to the near exchange via bidirectional links devoted to the analogous signalling criteria and to speech signals of the subscribers, said line units comprising sensors for sensing and drivers for originating the electrical statuses constituting the analogous signalling criteria on the links to the processing unit and registers memorizing the signalling criteria coming from the centralized processing unit, and

c) a multiplex terminal unit connected by means of bidirectional links for speech transit to each of the line units and supporting the PCM carrier, said unit encoding speech signals from a subscriber into PCM and being equipped with a line multiplexer for the insertion of signalling criteria arriving from the centralized processing unit into a predetermined time slot of the PCM frame for signalling transmission.

Such PCM carrier arranged by frames of time slots has been standardized by CCITT recommendation. PCM transmission techniques including the insertion of the signalling into the frame and including signalling translators have been generally described e.g. in FERNMELDE-PRAXIS, vol. 48, 25th January, 1971, No. 2, pages 51 to 68. Also programmable signalling translators for an exchange with a centralized logic have become known (Paolo Bonati in "Traslatori Programmabili a Logica Centralizzata" in TELECOMUNICAZIONI No. 52. September 1974, pages 23 to 30). Further, it has been known for a telephone network using a digital exchange that subscribers connection units comprise units designed to transmit digitally to a switching network the various signallings and to carry out a first processing of multifrequency code signallings (1976 INTERNATIONAL ZUERICH SEMINAR ON DIGITAL COMMUNICATIONS, 9th—11th March, 1976, J. N. MEREUR: "The E10 System in the French Telephone Network", pages E1.1 to E1.8).

When exchanges of different design and manufacturer are introduced in the telephone network, it becomes necessary to use the incoming and outgoing line units which indeed are line-exchange interface units in order to adapt signalling systems of different exchanges to the line code, which is generally standardized according to the type of transmission multiplex used in the national networks.

The use of appropriate line units for each type of exchange is expensive, as a result of the great number of line units used in each exchange and because of the variety and complexity of their structure.

Standardization of the various types of line unit is advisable. This may be brought about through a complete transformation of signal processing, by entrusting a programmable centralized processing unit with the control of the signalling. Modern telephone technology is tending in just this direction, for reasons of economy and flexibility of use. In fact a reduction in the complexity and variety of the line units may largely compensate the cost of the processing unit, whilst the flexibility deriving from the centralized logic allows for the processing of statistical data, consisting in the number and average duration of calls in progress, as well as for continuous supervision of the quality of apparatus operations, etc.

A further problem arising from the increasing utilization of PCM links in urban and other areas coinsists in the saturation of the 2-way per direction signalling code (hitherto utilized on such links), which makes use of pulse criteria differing in emission duration. This saturation makes it impossible to encode further useful criteria.

Some solutions to these problems consist of centralized logic signalling structures, wherein criteria coming from the exchange through line units are converted into a code suitable for the centralized logic. Criteria outgoing from the centralized logic are reconverted into a 2-way per direction line code through conventional signalling stages of the PCM multiplex.

The disadvantages of these systems arise from this second code conversion, which entails a return to the limitations characteristic of the PCM code with two ways in each direction, and from the re-utilization of the signalling circuitry of the PCM multiplex.

It is the object of the invention to optimize the system and its parts to transmit the signalling by means of encoded signal criteria. This is achieved by the invention which, starting out from an equipment as defined above, is characterized in that

d) each of the line units is connected to the centralized processing unit via a common input-output interface connected to each of the line units by means of a bidirectional signalling link for the transit of the signalling criteria.

e) the input-output interface comprises a multiplexer scanning the signalling links and a time metering device for the measurements of the signals received from this multiplexer.

f) the multiplex terminal unit is connected to the centralized processing unit via a transmission interface connected to the multiplex terminal unit by means of a bidirectional link for the transit of encoded signalling criteria consisting of binary words and arriving from the remote exchange or originated by the centralized processing unit for sending to the remote exchange,

g) the transmission interface comprises a parallel-to-serial converter converting the encoded signalling criteria coming from the processing unit and to be sent to the remote exchange and a register storing these encoded signalling criteria to effect their transmission again and again till the arrival of a new encoded signalling criterion, a serial-to-parallel converter converting the encoded signalling criteria coming via the multiplex terminal unit from the remote exchange and to be sent to the processing unit and a register storing these encoded signalling criteria, and a comparison device comparing the encoded signalling criteria in the registers to the respective encoded signalling criteria incoming from the processing unit or from the remote exchange, respectively.

Such equipment no longer needs two wires for transmitting the signalling criteria to be scanned and inserted into the PCM frame by the multiplexer. The invention 1) allows a signalling interchange on a common channel in the language characteristic of the logic unit, 2) utilizes line units of an extremely simplified type and 3) permits the interchange of a high number of checks and control data in addition to conventional signalling data.

A further advantage of the present equipment, particularly in the present phase of progressive introduction of stored program digital exchanges near conventional exchanges, consists in the ease with which these types of exchange can be interconnected.

In fact, a digital exchange may handle a signalling flow at 64 Kbit/s, sent by a conventional exchange making use of the connection system hereinafter described, since the data is in a format which may be accepted by its control computer.

In other words, the flow of signalling data may be extracted from the near PCM multiplex without resorting to interface operations.

These and other characteristics of the present invention will be made clearer by the following description of a preferred embodiment thereof, given by way of example and not in a limiting sense, and by the annexed block diagram.

Drawing references UL1, UL2 ... ULn denote the line units. These comprise that portion of the conventional line unit circuits which are required to adjust the levels of input and output voltage and current, and which consist of sensors and actuators; as well as a register capable of memorizing the signals coming from the centralized logic.

References r1, r2 ... rn denote the links coming from the switching exchange on which are transferred both signalling criteria to be sent to line units or travelling therefrom towards the exchange, and speech-frequency signals of the calls.

References s1, s2 ... sn denote the links establishing the connection between line units and PCM multiplex terminal unit (denoted by TM) for speech transit; references t1, t2 ... tn denote the links allotted to signalling criterial to be sent to processing unit EL or coming therefrom. Links t1, t2 ... tn are grouped into a "bus" denoted by 1, which consists of a bidirectional multiple connection on which signals are conveyed in time sharing.

The PCM terminal unit, denoted by TM, comprises the circuits necessary for speech signal sampling, encoding them and for conversion into the line code, as well as the circuits required for inserting signalling directly into the 16th time slot of PCM frame. Wire 5 is the interexchange transmission line, on which normalized PCM frames with frequency of 2048 Kbit/s are transmitted.

Reference IU denotes an input and output interface which is inserted between bus 1 coming from line units and processing unit EL, and which carries out all the non-intelligent and repetitive operations (wire scanning, integration, time measurement) which must be effected before the logic unit processes the signalling code.

In particular, IU enables the line units to provide that exchange signalling be transferred into an input register during the allotted time slots. IU then interprets the status changes of the signalling criteria, sends them to EL and allows EL to prepare the signalling to be sent to the exchange on the desired line unit UL in an asynchronous fashion.

The microcomputer employed in processing unit EL is, given the nature of its tasks, of an unsophisticated type and hence of limited costs.

Its operations consist chiefly of:

—interpreting the signalling coming from the near exchange through the line unit sensors;

— preparing and sending the signalling towards the terminal unit TM through block IT;

— interpreting the signalling coming from the remote exchange by means of block IT;

— returning criteria to the near exchange through the activation of line unit actuators;

— processing statistical data.

Reference IT denotes a bidirectional transmission interface which adapts EL machine language output both electrically and in format to the internationally standardized interfacing characteristics of the multiplex and viceversa.

Moreover, IT supervises the development of the data received from the interexchange transmission lines through TM by carrying out contents comparisons of subsequent messages, integrates these message to protect against noises and generates and checks the multiframe synchronism.

Finally, IT stores the signalling coming from EL and directed toward the transmission line and repeats it cyclically till a new criterion arrives, which is in turn memorized and repeated.

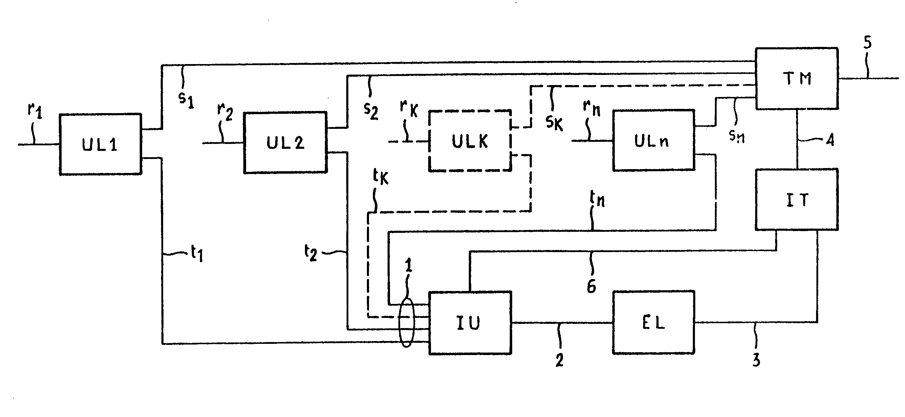

The operation of the system will now be described with reference to the drawing, for a particular case in which thirty different circuits are served.

When a subscriber engages the line to establish a call, an exchange device looks for a line unit available among the outgoing UL units. In this case, it locates and engages UL1.

The UL1 sensor detects the engagement criterion and translates it to a voltage value (a logic level, for example) suitable for the input and output unit IU.

In the time slot allotted to UL1 by IU, which controls the cyclical scanning of the units UL at a multiframe rhythm, the information present on link t1 arrives at IU through bus 1.

In order to avoid faulty interpretations of transmissions as a result of noises, transients or relay rebounds, the signal is integrated in IU. It is then transferred through link 2 to processing unit EL.

For better protection against faulty criteria recognitions, EL can, in certain cases, request IU (which is equipped with a time measuring device) to perform time interval measurements. This enables desired signals to be distinguished from spurious ones, which are generally transient.

EL, considering the situation of UL1 and of the corresponding line unit in the remote exchange, proceeds to recognize the received signalling criterion, which in this particular case consists of an engagement request. The recognition is based on the intersection of a spacial and a temporal event; in fact, the arriving signal may represent different signalling criteria, depending on which wire inside t1 it appears (and therefore on the sensor to which it is connected), and on the time phase in which it takes place within the connection.

After recognizing the criterion and accepting it as valid on the basis of suitable rules of coherence with the usual signalling sequence, EL transmits the request for remote exchange line unit engagement on connection 3.

The outgoing message from EL appears at transmission interface IT in a parallel configuration. Thus, IT must convert from parallel to serial, and restore voltage levels and polarity to the values required by the multiplex terminal unit TM data insertion interface in accordance with internationally standardized procedures.

The EL message stored in the IT memory is repeatedly transmitted on the line to the arrival of the next message.

Moreover, IT generates and checks the multiframe synchronism and informs EL should synchronism be lost.

The TM data insertion interface receives the message coming from IT on connection 4 at the frequency of 64 Kbit/s, and inserts the same into the data flow at 2048 Kbit/s, comprising the speech, to be sent on the transmission line 5.

The signalling message is located in the 16th time slot of the PCM frame consisting of 32 time slots, namely in that frame, among the 32 frames forming the multiframe, which is allotted to that particular line units.

The frame synchronism is generated by PCM terminal unit; when an anomaly occurs, first IT and then EL is informed.

Remote exchange operation upon arrival of the engagement criteria on line 5 will now be examined.

The signalling processing devices are identical to those of the calling exchange, and are thus denoted by the same references.

Transmission interface IT stores the last signalling criteria to be received in the memory, and cyclically compares received and memorized criteria in a period equal to that of the multiframe.

When a variation in the message contained in the 16th time slot of the frame associated with the called line unit occurs, IT detects it on the basis of subsequent comparisons, and sends it to processing device EL.

IT also integrates the arriving signal during the receiving phase in order to avoid any noises which might occur.

EL recognizes the message coming from IT on connection 3 as an engagement request and requests IU, by asynchronous commands, to activate the actuators in the line unit concerned.

If the engagement has been successful, a signal from the exchange is received and sent back by UL. This signal is encoded through EL as signalling criterion and is then sent to the calling exchange following the usual procedure.

A quick connection, denoted in the drawing by 6, is provided between IU and IT for the transit of criteria coming from a sensor of each UL. These criteria are inserted directly without processing operations into the 16th time slot by utilizing two bits out of the eight allotted to this service.

At the receiving side, EL decides on the basis of the program whether or not to utilize this information to integrate the usual signalling in case of quick criteria, e.g. dialling criteria.

In fact for this kind of criteria, errors may occur as a result of the uncertainty of the sampling period with respect to the duration of the criteria, as sensors are scanned with a 4 ms iterative frame cycle which is considerably shorter than the 40 ms minimum duration of the quickest criteria.

Should there be a number of transit exchanges between the calling and the called exchanges, sampling uncertainty may accumulate to the extent of causing signalling errors.

The processed message is compared with the message transmitted through the quick connection in order to inform the exchange of any error which may have occured.

All the other criteria are processes in the same way as the engagement criterion. The above Description has been given only by way of example, and not in a limiting sense. Variations and modifications could be made while remaining within the scope of the invention.

## Claims

1. Interexchange equipment located at a near exchange for telephone signalling between the near exchange and a remote exchange on PCM carrier arranged by frames of time slots, said equipment utilizing

a) a centralized processing unit (EL) recognizing analogous signalling criteria consisting of electrical statuses, and sending criteria to the exchanges,

b) centralized-logic line units (UL1, UL2,...ULn) linked between the processing unit (EL) and the near exchange and connected to the near exchange via bidirectional links (r1, r2,...rn) devoted to the analogous signalling criteria and to speech signals of the subscribers, said line units comprising sensors for sensing and drivers for originating the electrical statuses constituting the analogous signalling criteria on the links to the processing unit (EL) and registers memorizing the signalling criteria coming from the centralized processing unit, and

c) a multiplex terminal unit (TM) connected by means of bidirectional links (S1, S2,...Sn) for speech transit to each of the line units (UL1,...) and supporting the PCM carrier, said unit (TM) encoding speech signals from a subscriber into PCM and being equipped with a line multiplexer for the insertion of signalling criteria arriving from the centralized processing unit (EL) into a predetermined time slot of the PCM frame for signalling transmission, characterized in that

d) each of the line units (UL1,...) is connected to the centralized processing unit (EL) via a common input-output interface (IU) connected to each of the line units by means of a bidirectional signalling link $(t_1, t_2, \ldots t_n)$ for the transit of the signalling criteria,

e) the input-output interface (IU) comprises a multiplexer scanning the signalling links $(t_1, \ldots)$ and a time metering device for the measurements of the signals received from this multiplexer,

f) the multiplex terminal unit (TM) is connected to the centralized processing unit (EL) via a transmission interface (IT) connected to the multiplex terminal unit by means of a bidirectional link (4) for the transit of encoded signalling criteria consisting of binary words and arriving from the remote exchange or originated by the centralized processing unit for sending to the remote exchange,

g) the transmission interface (IT) comprises a parallel-to-serial converter converting the encoded signalling criteria coming from the processing unit (EL) and to be sent to the remote exchange and a register storing these encoded signalling criteria to effect their transmission again and again till the arrival of a new encoded signalling criterion, a serial-to-parallel converter converting the encoded signalling criteria coming via the multiplex terminal unit (TM) from the remote exchange and to be sent to the processing unit (EL) and a register storing these encoded signalling criteria, and a comparison device comparing the encoded signalling criteria in the registers to the respective encoded signalling criteria incoming from the processing unit (EL) or from the remote exchange, respectively.

2. Interexchange equipment according to claim 1, characterized in that the input-output interface (IU) is connected to the transmission interface (IT) by means of a quick connection (6) on which a portion of the signalling may transit without undergoing any processing operations.

3. Interexchange equipment according to claim 1 or 2, characterized in that the input-output interface (IU) and the transmission interface (IT) each comprise an integrator filtering noises from the signals received from the line units (UL1,...) or from the multiplex terminal unit (TM), respectively.

4. Interexchange equipment according to any one of claims 1 to 3, characterized in that the transmission interface (IT) further comprises a voltage level translater converting the encoded signalling criteria voltage level so as to be acceptable for the multiplex terminal unit (TM).

## Revendications

1. Système de connexion entre centraux téléphoniques placé dans un central voisin pour la signalisation téléphonique entre un central voisin et un central éloigné employant une porteuse MIC organisée par des trames d'intervalles de temps, ledit système comprenant:

a) une unité centralisée de traitement (EL) capable de reconnaître des critères de signalisation analogiques, constituée par des états électriques, et capable aussi d'envoyer des critères aux centraux,

b) des unités de ligne à logique centralisée (UL1, UL2,...ULn) connectées entre l'unité de traitement (EL) et le central voisin et connectées au central voisin au moyen de connexions à deux sens (r1, r2,...rn) pour les critères de signalisation analogiques et les signaux de phonie des abonnés, lesdites unités de ligne étant constituées par des dispositifs capteurs et activateurs capables respectivement de capter et engendrer des états électriques qui formentles critères de signalisation analogiques sur les connexions avec l'unité de traitement (EL) et par des registres capables de mémoriser les critères de signalisation provenant de l'unité de traitement centralisée, et

c) un terminal multiplex (TM) connecté au moyen des connexions à deux sens (S1, S2...Sn) pour le passage de la phonie à chacune des unités de ligne (UL1,...) et capable de supporter la porteuse MIC, ledit terminal (TM) étant capable aussi de coder en MIC la phonie reçue d'un abonné et étant doté d'un multiplexeur de ligne capable d'insérer les critères de signalisation provenant de l'unité centralisée de traitement (EL) dans un déterminé intervalle de temps de la trame MIC pour la transmission de la signalisation, caractérisé en ce que:

d) chacune des unités de ligne (UL1,...) est connectée à l'unité centralisée de traitement (EL) au moyen d'une interface commune d'entrée et de sortie (IU) connectée à chacune des unités de ligne au moyen d'une connexion de signalisation à deux sens $(t_1, t_2, \ldots t_n)$ pour le passage des critères de signalisation,

e) l'interface d'entrée et de sortie (IU) comprend un multiplexeur qui explore les connexions de signalisation $(t_1, \ldots)$ et un compteur de temps pour mesurer la durée temporelle des signaux reçus dudit multiplexeur,

f) le terminal multiplex (TM) est connecté à l'unité de traitement centralisée (EL) au moyen d'une interface de transmission (IT) connectée au terminal multiplex par une connexion à deux sens (4) pour le passage des critères de signalisation à message codé, constitués par des mots binaires, arrivant du central éloigné ou engendrés par l'unité de traitement centralisée pour le central éloigné.

g) l'interface de transmission (IT) est constituée par un convertisseur parallèle/série, capable de convertir les critères de signalisation à message codé arrivant de l'unité de traitement (EL) destinés au central éloigné, par un registre capable de mémoriser lesdits critères de signalisation à message codé pour en effectuer des transmissions répétées jusqu'à l'arrivée d'un nouveau critère de signalisation, par un convertisseur série/parallèle capable de convertir les critères de signalisation à message codé qui arrivent au moyen d'un terminal multiplex (TM) du central éloigné et qui doivent être envoyés à l'unité de traitement (EL), par un registre capable de mémoriser lesdits critères de signalisation à message codé et par un dispositif de comparaison capable d'effectuer des preuves d'égalité des critères de signalisation à message codé dans des registres avec les respectives critères de signalisation qui arrivent de l'unité de traitement (EL), ou, respectivement, du central éloigné.

2. Système de connexion entre centraux téléphoniques selon la revendication 1, caractérisé en ce que l'interface d'entrée et de sortie (IU) est connectée à l'interface de transmission (IT) au moyen d'une connexion rapide (6) sur laquelle une partie de la signalisation peut transiter sans qu'elle subisse aucun procédé de traitement.

3. Système de connexion entre centraux téléphoniques selon la revendication 1 ou 2, caractérisé en ce que l'interface d'entrée et de sortie (IU) et l'interface de transmission (IT) comprennent chacune un intégrateur capable de filtrer les signaux parasites des signaux qui arrivent des unités de ligne (UL1,...) ou, respectivement, du terminal multiplex (TM).

4. Système de connexion entre centraux téléphoniques selon l'une quelconque des revendications 1 à 3, caractérisé en ce que l'interface de transmission (IT) comprend aussi un translateur de niveau de tension capable de convertir le niveau de tension des critères de signalisation à message codé en un format acceptable par un terminal multiplex (TM).

**Patentansprüche**

1. Schaltungsanordnung zur Verbindung zwischen Vermittlungsstellen, die an einer nahen Vermittlungsstelle zur Fernsprechsignalisierung zwischen der nahen Verbindungsstelle und einer entfernten Verbindungsstelle über PCM-Träger, die in Rahmen von Zeitlagen organisiert sind, angeordnet ist, wobei dieser Verbindungssatz folgende Schaltungen verwendet:

a) eine zentralisierte Datenverarbeitungseinheit (EL), die aus elektrischen Zuständen bestehende analoge Signalisierungskriterien erkennt und Kriterien zu den Vermittlungsstellen sendet,

b) Leitungseinheiten (UL1, UL2,...ULn) einer zentralisierten Logik, die zwischen die Datenverarbeitungseinheit (EL) und die nahe Vermittlungsstelle eingeschaltet sind und mit der nahen Vermittlungsstelle über in beiden Richtungen übertragende Verbindungsleitungen (r1, r2,...rn) verbunden sind, die für die analogen Signalisierungskriterien und für Sprechsignale der Teilnehmer bestimmt sind, wobei die Leitungseinheiten Sensoren zum Feststellen der und Treiber zum Erzeugen der elektrischen Zustände enthalten, welche die analogen Signalisierungskriterien auf den Verbindungsleitungen zu der Verarbeitungseinheit (EL) bilden, sowie Register, die die von der zentralisierten Datenverarbeitungseinheit kommenden Signalisierungskriterien speichern, und

c) eine Multiplex-Endstelle (TM), die mit Hilfe von in beiden Richtungen übertragenden Verbindungsleitungen (S1, S2,...Sn) für Sprachübertragung mit jeder der Leitungseinheiten (UL1,...) verbunden ist und den PCM-Träger überträgt, wobei die Endstelle (TM) Sprechsignale eines Teilnehmers in PCM kodiert und mit einem Leitungsmultiplexer für die Einfügung von Signalisierungskriterien, die von der zentralisierten Datenverarbeitungseinheit (EL) eintreffen, in eine gegebene Zeitlage des PCM-Rahmens für die Signalisierungsübertragung ausgestattet ist, dadurch gekennzeichnet, daß

d) jede der Leitungseinheiten (UL1,...) mit der zentralisierten Datenverarbeitungseinheit (EL) über eine gemeinsame Eingangs-Ausgangs-Schnittstellenschaltung (IU) verbunden ist, die mit jeder der Leitungseinheiten über eine in beiden Richtungen übertragende Signalisierungsleitung ($t_1$, $t_2$, ... $t_n$) für den Durchgang der Signalisierungskriterien verbunden ist,

e) die Eingangs-Ausgangs-Schnittstellenschaltung (IU) einen Multiplexer, der die Signalisierungsleitungen ($t_1$, ...) abtastet, und eine Zeitmeßvorrichtung für die Zeitdauer-Messungen der von diesem Multiplexer empfangenen Signale umfaßt,

f) die Multiplex-Endstelle (TM) mit der zentralisierten Datenverarbeitungseinheit (EL) über eine Übertragungs-Schnittstellenschaltung (IT) verbunden ist, die mit der Multiplex-Endstelle über eine in beiden Richtungen übertragende Leitung (4) den Durchsatz kodierter Signalisierungskriterien verbunden ist, welche aus binären Wörtern bestehen und von der entfernten Vermittlungsstelle eintreffen oder von der zentralisierten Datenverarbeitungseinheit zum Senden an die entfernte Vermittlungsstelle erzeugt worden sind,

g) die Übertragungs-Schnittstellenschaltung (IT) folgende Schaltungen umfaßt: einen Parallel-Serien-Umsetzer, der die von der Datenverarbeitungseinheit (EL) kommenden und zur entfernten Vermittlungsstelle zu sendenden kodierten Signalisierungskriterien umsetzt; ein Register, das diese kodierten Signalisierungskriterien speichert, um ihre so lange wiederholte Aussendung zu bewirken, bis ein neues kodiertes Signalisierungskriterium eintrifft; einen Serien-Parallel-Umsetzer, der die von der entfernten Vermittlungsstelle über die Multiplex-Endstelle (TM) kommenden und zur Datenverarbeitungseinheit (EL) zu sendenden kodierten Signalisierungskriterien umsetzt; ein diese kodierten Signalisierungskriterien speicherndes Register; und schließlich einen Komparator, der die kodierten Signalisierungskriterien in den Registern mit den entsprechenden von der Datenverarbeitungseinheit (EL) bzw. von der entfernten Vermittlungsstelle hereinkommenden kodierten Signalisierungskriterien vergleicht.

2. Schaltungsanordnung nach Anspruch 1, dadurch gekennzeichnet, daß die Eingangs-Ausgangs-Schnittstellenschaltung (IU) mit der Übertragungs-Schnittstellenschaltung (IT) über eine schnelle Verbindung (6) verbunden ist, auf der ein Teil der Signalisierungen durchlaufen können, ohne irgendwelchen Verarbeitungsvorgängen unterworfen zu werden.

3. Schaltungsanordnung nach Anspruch 1 oder 2, dadurch gekennzeichnet, daß die Eingangs-Ausgangs-Schnittstellenschaltung (IU) und die Übertragungs-Schnittstellenschaltung (IT) jeweils einen Integrator umfassen, der Rauschsignale aus den von den Leitungseinheiten (UL1, ...) bzw. von der Multiplex-Endstelle (TM) empfangenen Signale filtert.

4. Schaltungsanordnung nach einem der Ansprüche 1 bis 3, dadurch gekennzeichnet, daß die Übertragungs-Schnittstellenschaltung (IT) weiterhin einen Spannungspegelübertrager enthält, der den Spannungspegel der kodierten Signalisierungskriterien so umwandelt, daß er für die Multiplex-Endstelle (TM) annehmbar wird.